# EUROPÄISCHE PATENTSCHRIFT

(11) **EP 1 719 678 B1**
(45) Veröffentlichungstag und Bekanntmachung des Hinweises auf die Patenterteilung: **31.03.2010**
(21) Anmeldenummer: 06008854.9
(22) Anmeldetag: 28.04.2006
(51) Int. Cl.: B60T 11/18, B60T 17/04, B60T 17/08

(54) **Mehrkreisschutzventil**
Multi-circuit protection valve
Valve de protection pour plusieurs circuits

(30) Priorität: 03.05.2005 DE 102005020649; 26.08.2005 DE 102005040498
(43) Veröffentlichungstag der Anmeldung: 08.11.2006
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A- 0 976 636
- DE-A1- 19 704 358
- DE-A1- 19 954 584
- GB-A- 2 310 017

## Beschreibung

Die Erfindung betrifft ein Mehrkreisschutzventil für eine Druckluftbremsanlage eines Nutzfahrzeugs, mit einem Drucklufteingang, einem ersten Druckluftausgang zur Versorgung eines Betriebsbremskreises und einem zweiten Druckluftausgang zur Versorgung einer Federspeicherbremse, wobei in der zu dem ersten Druckluftausgang führenden Leitung ein erstes Überströmventil vorgesehen ist, in der zu dem zweiten Druckluftausgang führenden Leitung ein zweites Überströmventil vorgesehen ist und die Überströmventile jeweils einen dem Drucklufteingang zugewandten Eingangsanschluss und einen dem jeweiligen Druckluftausgang zugewandten Ausgangsanschluss aufweisen.

Die Erfindung betrifft weiterhin eine Luftaufbereitungsanlage mit einem Mehrkreisschutzventil.

Nutzfahrzeuge sind vielfach mit Druckluftanlagen ausgestattet, um eine pneumatische Bremsanlage sowie andere Druckluftverbraucher mit Druckluft zu versorgen. Derartige Druckluftversorgungsanlagen enthalten ein Mehrkreisschutzventil, das insbesondere dazu dient, die einzelnen Druckluftkreise gegeneinander abzusichern und eine bestimmte Füllreihenfolge bei Inbetriebnahme des Kraftfahrzeugs sicherzustellen. Das Mehrkreisschutzventil nimmt dabei eine zentrale Rolle im Hinblick auf die Betriebssicherheit des Nutzfahrzeugs ein. Ein wichtiger Aspekt dieser Betriebssicherheit hängt mit den Maßnahmen im Falle eines Defektes in einem der Betriebsbremskreise zusammen. Sinkt in einem solchen Defektfall der Druck in den Betriebsbremskreisen ab, so muss im Hinblick auf eine Wiederinbetriebnahme des Fahrzeugs nach einer gewissen Standzeit sichergestellt sein, dass die Feststellbremse nicht gelöst werden kann, solange nicht mindestens der Hilfsbremsdruck der Betriebsbremskreise erreicht ist. Andererseits darf im Defektfall der Druckverlust im Kreis der Feststellbremse nicht so rasch erfolgen, dass es während der Fahrt zu einem automatischen Einlegen der Feststellbremse käme. Gelöst wird diese Aufgabe im Allgemeinen durch ein gedrosseltes Abströmen von Druckluft aus dem Kreis der Feststellbremse, wobei die Drossel so auszulegen ist, dass der Druckverlust in der Feststellbremse über die Drossel nicht größer ist als die Förderleistung des Kompressors bei Standgas.

Die DE 197 04 358 A1 beschreibt ein Mehrkreisschutzventil, bei dem im Falle eines Kreisdefektes der Betriebsbremse der Druck aus dem eine Federspeicherbremse beliefernden Kreis über eine Drossel und ein 2/2-Wegeventil abgelassen wird. Im Falle des Defektes eines Betriebsbremskreises kommt es somit zu einem Druckluftabbau in den Federspeicherbremsen. Wenn bei Wiederinbetriebnahme des Fahrzeugs nach einer Standzeit der Druck in den Betriebsbremskreisen unter den Hilfsbremsdruck abgesunken ist, wird somit ein Lösen der Feststellbremse verhindert. Diese an sich funktionstüchtige Lösung ist aber auch mit Nachteilen behaftet, die insbesondere in dem durch das zusätzlich vorzusehende 2/2-Wegeventil zusätzlichen Aufwand begründet sind.

In der EP 0 642 962 B1 wurde bereits vorgeschlagen, den Feststellbremskreis über eine Drossel und ein Rückschlagventil direkt mit einem Betriebsbremskreis zu verbinden. Bei dieser Lösung ist aber ebenfalls ein den baulichen Aufwand betreffender Nachteil zu verzeichnen, nämlich die Notwendigkeit einer eigens für die gedrosselte Entlüftung vorzusehenden Drossel.

Der Erfindung liegt die Aufgabe zugrunde, ein Mehrkreisschutzventil zur Verfügung zu stellen, auf dessen Grundlage die genannten Nachteile des Standes der Technik ausgeräumt werden, wobei insbesondere die Anwesenheit eines die Entlüftung steuernden 2/2-Wegeventils und die Anwesenheit einer eigens für die Entlüftung vorgesehenen Drossel entbehrlich sind.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Mehrkreisschutzventil dadurch auf, dass parallel zu dem ersten Überströmventil ein Bypass-Rückschlagventil und eine Drossel vorgesehen sind, so dass eine das erste Überströmventil umgehende gedrosselte Strömung zu dem ersten Druckluftausgang ermöglicht ist, dass eine Entlüftungsleitung vorgesehen ist, die eine Strömung von dem Ausgangsanschluss des zweiten Überströmventils zu dem Eingangsanschluss des ersten Überströmventils ermöglicht, und dass in der Entlüftungsleitung ein Rückschlagventil angeordnet ist, das eine Strömung von dem Ausgangsanschluss des zweiten Überströmventils zu dem Eingangsanschluss des ersten Überströmventils erlaubt und eine umgekehrte Strömung unterbindet. Moderne Mehrkreisschutzventile weisen vielfach parallel zu den die Betriebsbremskreise befüllenden Überströmventilen Rückschlagventile auf, über die die Überströmventile bei der Befüllung der Bremsanlage umgangen werden können. Hierdurch ist es nicht erforderlich, den Öffnungsdruck der Überströmventile aufzubauen, um ein Überströmen von Druckluft in die Behälter der Betriebsbremskreise zu ermöglichen; vielmehr ist eine Befüllung bereits bei niedrigeren Drücken über die jeweiligen Rückschlagventile möglich. Um den Druckaufbau auf der Eingangsseite der Überströmventile zu ermöglichen, sind die das Rückschlagventil enthaltenden das Überströmventil umgehenden Leitungen mit einer Drossel ausgestattet. Erfindungsgemäß wird nun dieser Strömungsweg über das Rückschlagventil und die Drossel auch zur Entlüftung des Feststellbremskreises im Falle eines Defektes eines Betriebsbremskreises genutzt. Zu diesem Zweck ist eine Entlüftungsleitung vorgesehen, die eine Strömung von dem Ausgangsanschluss des die Feststellbremsanlage beliefernden Überströmventils mit den Eingangsanschlüssen der Überströmventile verbindet. Die Leitung enthält ein Rückschlagventil, so dass eine Strömung nur vom Feststellbremsanlagenkreis zum Betriebsbremskreis zugelassen wird. Die für einen lansamen Druchabbau in der Feststellbremse erforderliche Drosselwirkung wird durch die Drossel im Umgehungszweig des Überströmventils zur Verfügung gestellt.

In diesem Sinne ist es bevorzugt, dass die Drossel mit dem Bypass-Rückschlagventil in Serie geschaltet ist.

Ebenfalls kann vorgesehen sein, dass die Drossel in das Bypass-Rückschlagventil integriert ist. Stattet man das Rückschlagventil im Umgehungszweig selbst mit einer Drosselwirkung aus, so kann eine separat vorgesehene Drossel entbehrlich sein.

Gemäß einer besonders bevorzugten Ausführungsform der vorliegenden Erfindung ist vorgesehen, dass die Entlüftungsleitung direkt mit dem Druckluftausgang zur Versorgung der Federspeicherbremse verbunden ist. Der Druckluftausgang für die Federspeicherbremse steht vielfach über ein Rückschlagventil mit einem weiteren Druckluftausgang des Mehrkreisschutzventils in Verbindung, an welchem der Druckluftbehälter für die Versorgung der Feststellbremse und der Anhängerbremsanlage angeschlossen ist. Schließt man die Entlüftungsleitung direkt an dem Druckluftausgang zur Versorgung der Federspeicherbremse an, so erfolgt im Defektfall eines Betriebsbremskreises nicht nur eine sofort einsetzende Entlüftung des Vorratsbehälters sondern auch ein Abbau des in dem zu den Federspeicherzylindern führenden Leitungszweig vorliegenden Restdrucks.

Andererseits ist es aber auch möglich, dass die Entlüftungsleitung direkt mit dem Ausgangsanschluss des zweiten Überströmventils verbunden ist. Der Restdruck in den Federspeicherzylindern kann auf diese Weise zwar länger erhalten bleiben, was ein Einbremsen verzögert. Durch geeignete Auslegung der Entlüftung und insbesondere der Drossel kann das System aber unter Berücksichtigung dieser Verzögerung abgestimmt werden.

Die Erfindung betrifft weiterhin eine Luftaufbereitungsanlage mit einem erfindungsgemäßen Mehrkreisschutzventil. Dabei kann es sich um eine herkömmliche Luftaufbereitungsanlage ohne Elektronik beziehungsweise um eine Luftaufbereitungsanlage mit elektronischer Steuerung (EAC) handeln.

Die Erfindung wird nun mit Bezug auf die begleitenden Zeichnungen anhand besonders bevorzugter Ausführungsformen beispielhaft erläutert.

Dabei zeigen:
- Figur 1: eine Schaltung einer ersten Ausführungsform eines erfindungsgemäßen Mehrkreisschutzventils und
- Figur 2: eine Schaltung einer zweiten Ausführungsform eines erfindungsgemäßen Mehrkreisschutzventils.

Bei der nachfolgenden Beschreibung der Zeichnungen bezeichnen gleiche Bezugszeichen gleiche oder vergleichbare Komponenten.

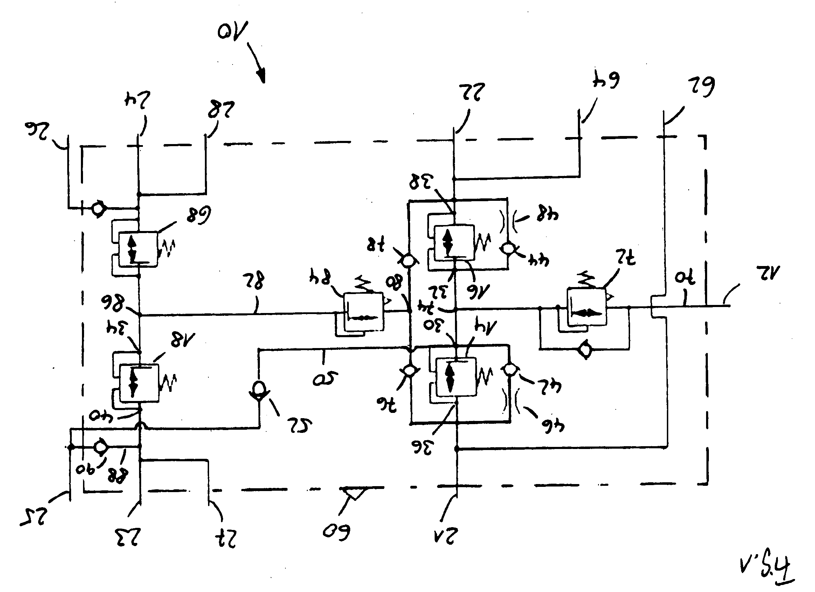

Figur 1 zeigt eine Schaltung einer ersten Ausführungsform eines erfindungsgemäßen Mehrkreisschutzventils. Das Mehrkreisschutzventil 10 hat einen Drucklufteingang 12, über den es mit einer Druckluftquelle, vorzugsweise über eine Filtereinheit, verbunden ist. Weiterhin sind mehrere Druckluftausgänge 21, 22, 23, 24, 25, 26, 27, 28 vorgesehen, an denen Druckluftverbraucher angeschlossen sind. Bei diesen Druckluftverbrauchern handelt es sich neben den für die vorliegende Erfindung wesentlichen Druckluftkreisen um sogenannte Nebenverbraucher, wie eine Luftfederung, eine Servo-Kupplungseinheit, ein automatisches Getriebe und dergleichen. Wesentlich für die vorliegende Erfindung sind die Druckluftausgänge 21, 22 für die Betriebsbremskreise, der Druckluftausgang 23 zum Anschluss eines Vorratsbehälters zur Versorgung der Anhängerbremsanlage und der Feststellbremsanlage sowie der Druckluftausgang 25 zur Versorgung der Feststellbremsanlage. Weiterhin ist ein Entlüftungsausgang 60 zum Ablassen von Druckluft vorgesehen. Zum Anschluss von Drucksensoren, beispielsweise eines Doppeldrucksensors, sind weiterhin zwei Anschlüsse 62, 64 vorbereitet, über die die Drücke in den Betriebsbremskreisen gemessen werden können. Dem Druckluftausgang 21 ist ein Überströmventil 14 zugeordnet, über das der Druckluftausgang 21 mit Druckluft versorgt wird. Dem Druckluftausgang 22 ist ein weiteres Überströmventil 16 zugeordnet, über das der Druckluftausgang 22 mit Druckluft versorgt wird. Dem Druckluftausgang 25 ist ein Überströmventil 18 zugeordnet, über das dieser Druckluftausgang 25 und die parallelen Druckluftausgänge 23, 27 mit Druckluft versorgt werden. Ebenfalls ist den Druckluftausgängen 24, 26, 28 ein Überströmventil 68 zu deren Versorgung zugeordnet. Der Eingangsanschluss 12 des Mehrkreisschutzventils 10 führt über eine Versorgungsleitung 70, in der ein Druckbegrenzer 72 angeordnet ist, zu einem gemeinsamen Eingangsknoten 74 der Überströmventile 14, 16. Dieser Eingangsknoten 74 ist schaltungstechnisch identisch zu den Eingangsanschlüssen 30, 32 der Überströmventile 14, 16. Über diesen Eingangsknoten 74 beziehungsweise die Eingangsanschlüsse 30, 32 strömt Druckluft zur Befüllung der an den Druckluftausgängen 21, 22 angeschlossenen Betriebsbremskreise über die Überströmventile 14, 16 beziehungsweise unter Umgehung der Überströmventile 14, 16 über die Rückschlagventile 42, 44 und die zugeordneten Drosseln 46, 48. Die Befüllung der weiteren Druckluftanlage erfolgt dann unter Entnahme von Druckluft aus den an den Druckluftausgängen 21, 22 angeschlossenen Betriebsbremskreisen über die Rückschlagventile 76, 78, die wiederum zu einem gemeinsamen Knoten 80 führen. Von diesem Knoten 80 geht eine Versorgungsleitung 82 aus, in der ein weiterer Druckbegrenzer 84 angeordnet ist. Diese weitere Versorgungsleitung 82 führt zu einem gemeinsamen Eingangsknoten 86 der Überströmventile 18, 68 und damit insbesondere zum Eingangsanschluss 30 des Überströmventils 18. Über das Überströmventil 18 kann dann eine Versorgung der an den Druckluftausgängen 23, 25, 27 angeschlossenen Druckluftverbraucher erfolgen, wobei insbesondere eine Befüllung des am Druckluftausgang 23 angeschlossenen Vorratsbehälters stattfindet. Die Druckluftausgänge 23, 25 sind über eine weitere Leitung 88 mit einem Rückschlagventil 90 verbunden. Über diese Leitung 88 erfolgt eine Versorgung des Druckluftausgangs 25 für die Feststellbremsanlage aus dem am Druckluftausgang 23 angeschlossenen Druckluftbehälter.

An dem Druckluftausgang 25 ist dann weiterhin eine Entlüftungsleitung 50 angeschlossen, die zu den Eingangsanschlüssen 30, 32 beziehungsweise dem gemeinsamen Eingangsknoten 74 der Überströmventile 14, 16 führt. In dieser Entlüftungsleitung 50 ist ein Rückschlagventil 52 vorgesehen, das eine Strömung von dem Druckluftausgang zu dem gemeinsamen Eingangsknoten 74 der Überströmventile 14, 16 zulässt, eine Strömung in Gegenrichtung jedoch unterbindet.

Im Falle eines Kreisdefektes in einem oder beiden Betriebsbremskreisen, die an den Druckluftausgängen 21 beziehungsweise 22 angeschlossen sind - zur Erläuterung wird beispielhaft der Druckluftausgang 21 betrachtet - arbeitet das Mehrkreisschutzventil 10 folgendermaßen. Aufgrund des Kreisdefektes wird der Druck am Druckluftausgang 21 abgebaut. Folglich kann eine Entlüftung des Druckluftausgangs 25 und der daran angeschlossenen Komponenten, das heißt insbesondere der Federspeicherzylinder, und über das Rückschlagventil 90 auch eine Entlüftung des am Druckluftausgang 23 angeschlossenen Vorratsbehälters in den defekten Betriebsbremskreis hinein erfolgen. Die Entlüftung findet über das Rückschlagventil 42 und die Drossel 46 statt, so dass der Druckverlust aus den Federspeicherzylindern während des Betriebs des Fahrzeugs die Förderleistung des Kompressors nicht übersteigt. Nach Wiederinbetriebnahme des Fahrzeugs kann ein Lösen der Feststellbremse aber nicht mehr erfolgen, wenn der Hilfsbremsdruck der Betriebsbremse nicht erreicht wird.

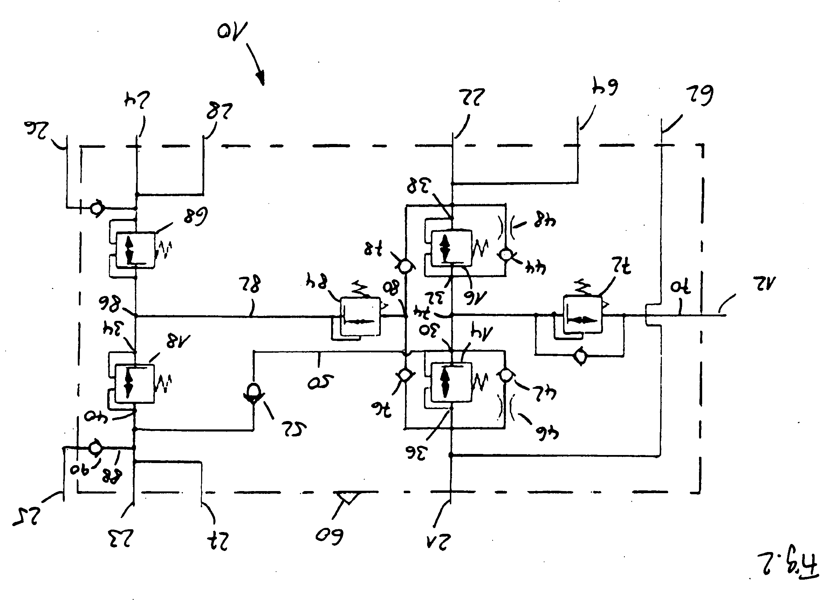

Figur 2 zeigt eine Schaltung einer zweiten Ausführungsform eines erfindungsgemäßen Mehrkreisschutzventils. Im Unterschied zu dem Ausführungsbeispiel gemäß Figur 1 ist bei der Ausführungsform gemäß Figur 2 die Entlüftungsleitung 50 direkt am Druckluftausgang 40 des Überströmventils 18 angeschlossen. Hierdurch kann auch eine Entlüftung erfolgen, wobei jedoch der am Druckluftausgang 25 anstehende Druck durch das Rückschlagventil 90 gestaut wird. Letztlich wird aber auch durch diese Ausführungsform eine Entlüftung des Vorratsbehälters, der am Druckluftausgang 23 angeschlossen ist, stattfinden, so dass keine Druckluft mehr für die Versorgung der Federspeicherzylinder zur Verfügung steht. Das Fahrzeug wird somit bei defektem Betriebsbremskreis in den sicheren Zustand mit entlüfteter Federspeicherbremse gelangen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Mehrkreisschutzventil
- 12: Drucklufteingang
- 14: Überströmventil
- 16: Überströmventil
- 18: Überströmventil
- 21: Druckluftausgang
- 22: Druckluftausgang
- 23: Druckluftausgang
- 24: Druckluftausgang
- 25: Druckluftausgang
- 26: Druckluftausgang
- 27: Druckluftausgang
- 28: Druckluftausgang
- 30: Eingangsanschluss
- 32: Eingangsanschluss
- 34: Eingangsanschluss
- 38: Ausgangsanschluss
- 40: Ausgangsanschluss
- 42: Bypass-Rückschlagventil
- 44: Bypass-Rückschlagventil
- 46: Drossel
- 48: Drossel
- 50: Entlüftungsleitung
- 52: Rückschlagventil
- 60: Entlüftungsausgang
- 62: Anschluss
- 64: Anschluss
- 68: Überströmventil
- 70: Versorgungsleitung
- 72: Druckbegrenzer
- 74: Eingangsknoten
- 76: Rückschlagventil
- 78: Rückschlagventil
- 80: Knoten
- 82: Versorgungsleitung
- 84: Druckbegrenzer
- 86: Eingangsknoten
- 88: Leitung
- 90: Rückschlagventil

## Patentansprüche

1. Mehrkreisschutzventil für eine Druckluftbremsanlage eines Nutzfahrzeugs, mit
- einem Drucklufteingang (12),
- einem ersten Druckluftausgang (21, 22) zur Versorgung eines Betriebsbremskreises und
- einem zweiten Druckluftausgang (25) zur Versorgung einer Federspeicherbremse,
- wobei in der zu dem ersten Druckluftausgang führenden Leitung ein erstes Überströmventil (14, 16) vorgesehen ist,
- in der zu dem zweiten Druckluftausgang führenden Leitung ein zweites Überströmventil (18) vorgesehen ist und
- die Überströmventile jeweils einen dem Drucklufteingang zugewandten Eingangsanschluss (30, 32, 34) und einen dem jeweiligen Druckluftausgang zugewandten Ausgangsanschluss (32, 38, 40) aufweisen,
**dadurch gekennzeichnet,**
- **dass** parallel zu dem ersten Überströmventil (14, 16) ein Bypass-Rückschlagventil (42, 44) und eine Drossel (46, 48) vorgesehen sind, so dass eine das erste Überströmventil umgehende gedrosselte Strömung zu dem ersten Druckluftausgang (21, 22) ermöglicht ist,
- **dass** eine Entlüftungsleitung (50) vorgesehen ist, die eine Strömung von dem Ausgangsanschluss (40) des zweiten Überströmventils zu dem Eingangsanschluss des ersten Überströmventils ermöglicht, und
- **dass** in der Entlüftungsleitung ein Rückschlagventil (52) angeordnet ist, das eine Strömung von dem Ausgangsanschluss des zweiten Überströmventils zu dem Eingangsanschluss des ersten Überströmventils erlaubt und eine umgekehrte Strömung unterbindet.

2. Mehrkreisschutzventil nach Anspruch 1, **dadurch gekennzeichnet, dass** die Drossel (46) mit dem Bypass-Rückschlagventil (42) in Serie geschaltet ist.

3. Mehrkreisschutzventil nach Anspruch 1, **dadurch gekennzeichnet, dass** die Drossel in das Bypass-Rückschlagventil integriert ist.

4. Mehrkreisschutzventil nach einem der vorangehenden Ansprüche, **dadurch gekennzeichnet, dass** die Entlüftungsleitung (50) direkt mit dem Druckluftausgang (25) zur Versorgung der Federspeicherbremse verbunden ist.

5. Mehrkreisschutzventil nach einem der Ansprüche 1 bis 3, **dadurch gekennzeichnet, dass** die Entlüftungsleitung (50) direkt mit dem Ausgangsanschluss (40) des zweiten Überströmventils (18) verbunden ist.

6. Luftaufbereitungsanlage mit einem Mehrkreisschutzventil (10) nach einem der vorangehenden Ansprüche.

## Claims

1. Multi-circuit protection valve for a pneumatic brake system of a commercial vehicle, comprising
- a compressed-air inlet (12),
- a first compressed-air outlet (21, 22) for supplying a service brake circuit, and
- a second compressed-air outlet (25) for supplying a spring-loaded brake,
- wherein first overflow valve (14, 16) is provided in the line leading to said first compressed-air outlet,
- a second overflow valve (18) is provided in the line leading to said second compressed-air outlet, and
- each of said overflow valves presents a respective inlet connector (30, 32, 34) facing the respective compressed-air inlet and a respective outlet connector (32, 38, 40) facing the respective compressed-air outlet,
**characterized in**
- **that** a by-pass check valve (42, 44) and a throttle valve (46, 48) are provided in parallel with said first overflow valve (14, 16) so that a throttled flow to said first compressed-air outlet (21, 22) is enabled , by-passing said first overflow valve,
- **that** a de-aeration line (50) is provided which permits a flow from said outlet connector (40) of said second overflow valve to said input connector of said first overflow valve, and
- **that** a check valve (52) is disposed in said de-aeration line, which permits a flow from said outlet connector of said second overflow valve to said inlet connector of said first overflow valve whilst it inhibits a flow in the opposite direction.

2. Multi-circuit protection valve according to Claim 1, **characterized in that** said throttle valve (46) is connected in series relative to said by-pass check valve (42).

3. Multi-circuit protection valve according to Claim 1, **characterized in that** said throttle valve is integrated into said by-pass check valve.

4. Multi-circuit protection valve according to any of the preceding Claims, **characterized in that** said de-aeration line (50) is connected directly to said compressed-air outlet (25) for supplying said spring-loaded brake.

5. Multi-circuit protection valve according to any of the Claims 1 to 3, **characterized in that** said de-aeration line (50) is connected directly to said compressed-air outlet (40) of said second overflow valve (18).

6. Air processing system including a multi-circuit protection valve (10) according to any of the preceding Claims.

## Revendications

1. Soupape de protection à plusieurs circuits pour un système de freinage pneumatique d'un véhicule utilitaire, comprenant
- une entrée de l'air comprimé (12),
- une première sortie de l'air comprimé (21, 22) pour l'alimentation d'un circuit de frein de service, et
- une deuxième sortie de l'air comprimé (25) pour l'alimentation d'un frein à accumulation,
- dans lequel une première soupape de décharge (14, 16) est disposée dans le conduit menant à ladite première sortie de l'air comprimé,
- une deuxième soupape de décharge (18) est disposée dans le conduit menant à ladite deuxième sortie de l'air comprimé, et
- chacune desdites soupapes de décharge présente un raccord respectif d'entrée (30, 32, 34) en face de la entrée de l'air comprimé respective et un raccord respectif de sortie (32, 38, 40) en face de la sortie de l'air comprimé respective,
**caractérisé en ce**
- **qu'**un clapet de non-retour à dérivation (42, 44) et une soupape d'étranglement (46, 48) sont disposés en parallèle à ladite première soupape de décharge (14, 16) d'une telle façon, qu'un courant étranglé à ladite première sortie de l'air comprimé (21, 22) devienne possible, en contournant ladite première soupape de décharge,
- en ce qu'un conduit d'évacuation d'air (50) est disposé, qui permet un courant à partir dudit raccord de sortie (40) de ladite deuxième soupape de décharge vers ledit raccord d'entrée de ladite première soupape de décharge, et
- en ce qu'un clapet de non-retour (52) est disposé dans ledit conduit d'évacuation d'air, qui permet un courant à partir dudit raccord de sortie de ladite deuxième soupape de décharge vers ledit raccord d'entrée of de ladite première soupape de décharge, pendant qu'il arrête un courant en sens inverse.

2. Soupape de protection à plusieurs circuits selon la revendication 1, **caractérisé en ce que** ladite soupape d'étranglement (46) est raccordée en série relativement audit clapet de non-retour à dérivation (42).

3. Soupape de protection à plusieurs circuits selon la revendication 1, **caractérisé en ce que** ladite soupape d'étranglement est intégrée dans ledit clapet de non-retour à dérivation.

4. Soupape de protection à plusieurs circuits selon une quelconque des revendications précédentes, **caractérisé en ce que** ledit conduit d'évacuation d'air (50) est raccordé directement à ladite sortie de l'air comprimé (25) pour l'alimentation dudit frein à accumulation.

5. Soupape de protection à plusieurs circuits selon une quelconque des revendications 1 à 3, **caractérisé en ce que** ledit conduit d'évacuation d'air (50) est raccordé directement à ladite sortie de l'air comprimé (40) de ladite deuxième soupape de décharge (18).

6. Système de traitement de l'air, comprenant une soupape de protection à plusieurs circuits (10) selon une quelconque des revendications précédentes.
